# EUROPÄISCHE PATENTSCHRIFT

(11) **EP 1 759 137 B1**
(45) Veröffentlichungstag und Bekanntmachung des Hinweises auf die Patenterteilung: **05.05.2010**
(21) Anmeldenummer: 05759381.6
(22) Anmeldetag: 20.06.2005
(51) Int. Cl.: F16K 15/14, F16K 17/19, A61M 39/24

(54) **RÜCKSCHLAGVENTIL**
CHECK VALVE
SOUPAPE DE RETENUE

(30) Priorität: 22.06.2004 DE 202004009831 U
(43) Veröffentlichungstag der Anmeldung: 07.03.2007
(73) Patentinhaber: Filtertek B.V., County of Limerick (IE)
(72) Erfinder: MIJERS, Jan Willem Marinus, NL-2101 EH Heemstede (NL)
(74) Vertreter: Brose, D. Karl
(86) Internationale Anmeldenummer: PCT/EP2005/006646
(87) Internationale Veröffentlichungsnummer: WO 2005/124208

(56) Entgegenhaltungen:
- EP-A- 0 612 537
- BE-A6- 1 009 834
- DE-A1- 4 315 701
- DE-U1-202004 009 831
- US-B1- 6 708 714

## Beschreibung

Die Erfindung betrifft ein Rückschlagventil mit einem ersten Schlauchanschlussgehäuse und einem zweiten Schlauchanschlussgehäuse und einer zwischen den beiden Schlauchanschlussgehäusen angeordneten Membranscheibe aus flexiblem Material, welche zwischen den beiden Schlauchanschlussgehäusen eingeklemmt und gegen einen in einem Eingangsraum angeordneten Ventilsitz vorgespannt ist und bei Überdruck im Eingangsraum von dem Ventilsitz abhebbar ist und einen Durchflussquerschnitt zu einem Ausgangsraum freigibt, wobei der Ausgangsraum mit einem bei Überdruck öffnenden Ventil verbunden ist, die Membranscheibe radial außerhalb deren Einspannung mit einem ringförmigen Streifen in einem Raum gegen einen ringförmigen zweiten Ventilsitz in Richtung des Eingangsraums vorgespannt ist, derart, dass der Raum in eine ringförmige Eingangskammer und eine ringförmige Ausgangskammer unterteilt wird und der Streifen der Membranscheibe das Schließglied des bei Überdruck öffnenden Ventils bildet.

Ein derartiges Ventil ist aus der US 6 708 714 B1 bekannt. Bei diesem Ventil handelt es sich um ein Drei-Wege-Rückschlagventil, was dessen Arbeitsweise und Konstruktion betrifft und welches als doppeltes Rückschlagventil in einem einzigen Gehäuse integriert wurde. Dieses bekannte Ventil dient dazu, als Pumpventil verwendet zu werden. Hierzu wird ein die zu pumpende Flüssigkeit enthaltender Behälter an den ersten Eingangsraum des Ventils angeschlossen und die Pumpe selbst an einen zweiten Eingangsraum des Ventils angeschlossen. Beim Saughub der Pumpe wird die Flüssigkeit zunächst aus dem Behälter in den zweiten Eingangsraum gefördert und beim Druckhub der Pumpe dann in einen Ausgangsraum überführt. Derartige Ventile werden in der Medizintechnik und der Hygiene, beispielsweise für Infusionspumpen, Sprühflaschen und dergleichen, verwendet. Bei dieser bekannten Konstruktion ist die Membran an ihrer radial äußersten Kante zwischen einem Ventilgehäuse und dem dazugehörigen Deckelgehäuse eingeklemmt. Radial weiter innen ist die Membranscheibe zusätzlich zwischen den Gehäusehälften eingeklemmt. Zwischen der Oberseite und Unterseite der Membranscheibe sind Bypass-Kanäle vorgesehen, welche bei Betätigung des bei Überdruck öffnenden Ventils eine ringförmige Eingangskammer mit einer ringförmigen Ausgangskammer verbinden, wobei letztere mit dem Ausgang des Ventils verbunden ist. Der zweite Einlass, welcher in Verbindung mit der Pumpe steht, ist über einen Verbindungskanal mit der ringförmigen Ausgangskammer verbunden. Während des Förderhubs der Pumpe wird somit über diesen Verbindungskanal im Vergleich mit der Eingangsseite, d.h. mit der Seite, an welche der Behälter angeschlossen ist, ein Überdruck erzeugt, welcher die Membranscheibe gegen den ersten Ventilsitz drückt, und gleichzeitig das bei Überdruck öffnende Ventil öffnet.

Aus dem EP 0 612 537 ist nach einem früheren Vorschlag der Anmelderin ferner ein Rückschlagventil bekannt, welches ein erstes Schlauchanschlussgehäuse und ein zweites Schlauchanschlussgehäuse und eine zwischen beiden Schlauchanschlussgehäusen angeordnete Membranscheibe aus flexiblem Material aufweist, die zwischen den beiden Schlauchanschlussgehäusen eingeklemmt und gegen einen in einem Eingangsraum angeordneten Ventilsitz vorgespannt ist und bei Überdruck im Eingangsraum von dem Ventilsitz abhebbar ist und einen Durchflussquerschnitt zu einem Ausgangsraum freigibt.

Die Erfindung liegt daher die Aufgabe zugrunde, ein Rückschlagventil der eingangs definierten Bauart vorzuschlagen, bei welchem auf einfache weise der Druck auf der Ausgangsseite des Rückschlagventils begrenzt werden kann.

Diese Aufgabe wird im Wesentlichen dadurch gelöst, dass das bei Überdruck öffnende Ventil als ein Einwege-Entlastungsventil ausgebildet ist, dass der Raum als Entlastungsraum ausgebildet ist, dass der Streifen der Membranscheibe durch den freien Randstreifen der Membranscheibe gebildet ist, welcher in den Entlastungsraum vorsteht, und dass die Ausgangskammer über ein oder mehrere Verbindungskanäle mit dem Eingangsraum verbunden ist.

Eine besonders bevorzugte Ausführungsform nach der Erfindung kann dadurch geschaffen werden, dass das Einwege-Entlastungsventil in einem radial außerhalb des Eingangsraums vorgesehenen ringförmigen Entlastungsraum angeordnet ist. Hierdurch wird eine besonders kompakte und wirtschaftliche Bauweise erzielt.

Im Einzelnen kann die Erfindung dadurch weitergebildet werden, dass die Eingangskammer über einen oder mehrere Verbindungskanäle mit dem Ausgangsraum verbunden ist. Die Entlastung eines zu hohen Drucks erfolgt daher über die Verbindungskanäle zunächst an der Eingangskammer zur Ausgangskammer des Entlastungsraums und von dort in den Eingangsraum des Rückschlagventils.

Eine vorteilhafte Weiterbildung der Erfindung besteht darin, dass die Membranscheibe radial innerhalb des Randstreifens mit einem Ringwulst versehen ist, dass das erste Schlauchanschlussgehäuse und das zweite Schlauchanschlussgehäuse mit einander gegenüberliegenden Ringstegen versehen ist, in deren aufeinander zuweisenden Flächen Ringnuten vorgesehen sind, welche den Ringwulst aufnehmen, wobei die Ringstege die Umfangswandung eines durch die Membranscheibe in den Eingangsraum und den Ausgangsraum unterteilten Hohlraums bilden.

Die Ringstege bilden bevorzugt die radiale Innenwandung des Entlastungsraums.

Eine vorteilhafte Ausführungsform nach der Erfindung kann ferner dadurch geschaffen werden, dass die Membranscheibe eine von dem Ventilsitz umgebende Öffnung aufweist, welche durch den Ventilsitz von dem Eingangsraum getrennt ist, und dass der Eingangsraum über einen oder mehrere Verbindungskanäle mit dem Eingang des ersten Schlauchanschlussgehäuses verbunden ist.

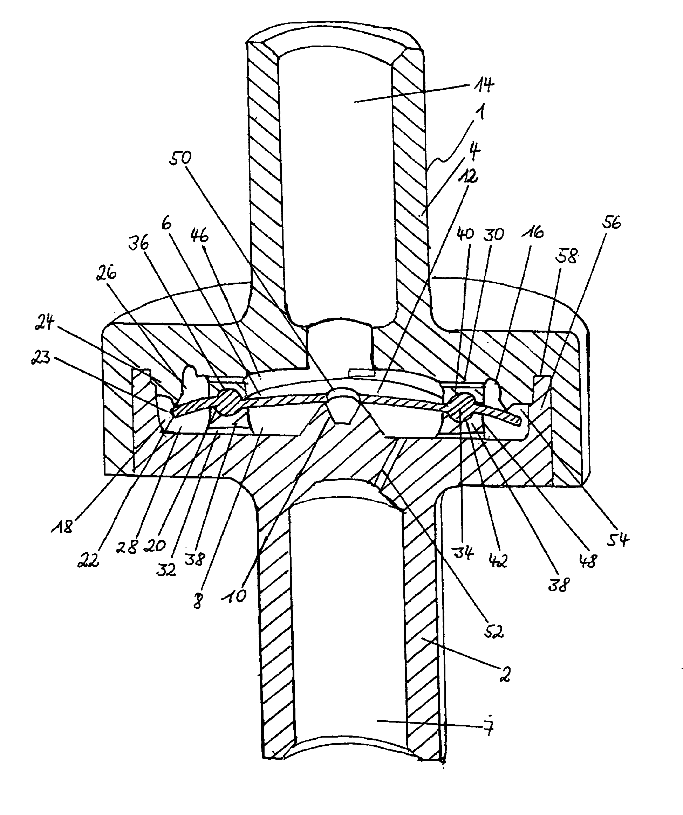

Im Folgenden wird die Erfindung an Hand einer in der Zeichnung beispielhaft veranschaulichten Ausführungsform näher erläutert.

Die Zeichnung zeigt eine Schnittansicht einer Ausführungsform des erfindungsgemäßen Rückschlagventils.

Das in der Zeichnung in der Schnittansicht schematisch dargestellte Rückschlagventil 1 weist ein erstes Schlauchanschlussgehäuse 2 und ein zweites Schlauchanschlussgehäuse 4 auf, welche beispielsweise durch Spritzgießen aus Kunststoff hergestellt sind. Zwischen den beiden Schlauchanschlussgehäusen 2 und 4 ist eine Membranscheibe 6 aus flexiblem Material, beispielsweise aus Silikon, angeordnet und ist, was weiter unten noch näher in Einzelheiten erläutert wird, zwischen den beiden Schlauchanschlussgehäusen 2 und 4 eingeklemmt.

Die Membranscheibe 6 ist gegen einen in einem Eingangsraum 8 des ersten Schlauchanschlussgehäuses 2 einstückig ausgebildeten Ventilsitz 10 vorgespannt. Wenn in dem Eingang 7 des ersten Schlauchanschlussgehäuses 2 ein Überdruck des gesteuerten Mediums vorliegt, wird dieser ebenfalls in dem Eingangsraum 8 herrschen und hebt die Membranscheibe 6 von dem Ventilsitz 10 ab, so dass ein Durchflussquerschnitt zu einem Ausgangsraum 12 in dem zweiten Schlauchanschlussgehäuse 4 freigegeben wird.

Erfindungsgemäß ist der Ausgangsraum 12 des zweiten Schlauchanschlussgehäuses 4 mit einem allgemein mit 16 bezeichneten Entlastungsventil verbunden, welches bei Überdruck in dem Ausgangsraum 12 bzw. dem Ausgang 14 des zweiten Schlauchanschlussgehäuses 4 öffnet und den Überdruck entsprechend entlastet.

Hierbei dient ein Bereich der Membranscheibe 6 als Schließglied des Entlastungsventils 16.

Zu diesem Zweck ist das Einwege-Entlastungsventil 16 in einem radial ausserhalb des Eingangsraums 8 vorgesehenen ringförmigen Entlastungsventil angeordnet, wobei der Entlastungsraum 18 durch entsprechende ringförmige Ausnehmungen in dem ersten Schlauchanschlussgehäuse 2 und dem zweiten Schlauchanschlussgehäuse 4 gebildet ist, die einander gegenüberliegend angeordnet sind.

Die Membranscheibe 6 weist radial ausserhalb ihrer Einspannung 20 einen ringförmigen Randstreifen 22 auf, welcher in den Entlastungsraum vorsteht, so dass der Aussenrand 23 sich kragarmähnlich aufwärts und abwärts bewegen kann. In dem Entlastungsraum 18 ist ein zweiter ringförmiger Ventilsitz 24 einstückig mit dem zweiten Schlauchanschlussgehäuse 4 ausgebildet und steht in Richtung des ersten Schlauchanschlussgehäuses 2, d.h. in Richtung des Eingangsraums 8, vor. Der zweite Ventilsitz 24 spannt den Randstreifen 22 in Richtung des Eingangsraums 8 vor, so dass der Bereich zwischen der Einspannung 20 und dem zweiten Ventilsitz 24 den Entlastungsraum 18 in eine ringförmige Eingangskammer 26 und eine ringförmige Ausgangskammer 28 unterteilt.

Die Eingangskammer 26 ist über einen oder mehrere Verbindungskanäle 30 mit dem Ausgangsraum 12 des zweiten Schlauchanschlussgehäuses 4 verbunden und die Ausgangskammer 28 ist über einen oder mehrere Verbindungskanäle 32 mit dem Eingangsraum 8 des ersten Schlauchanschlussgehäuses 2 verbunden.

Die Membranscheibe 6 ist innerhalb des Randstreifens 22 mit einem angespritzten Ringwulst 34 versehen. Das erste Schlauchanschlussgehäuse 2 und das zweite Schlauchanschlussgehäuse 4 weisen einander gegenüberliegende Ringstege 36 und 38 auf, welche in ihren aufeinander zuweisenden Flächen mit entsprechend dem Querschnitt des Ringwulstes 34 ausgebildeten Ringnuten 40 und 42 versehen sind. Die Ringnuten 40 und 42 nehmen den Ringwulst 34 auf und spannen so die Membranscheibe 6 zwischen den beiden Schlauchanschlussgehäusen 2 und 4 ein, wobei gleichzeitig der Mittelbereich der Membranscheibe 6 gegen den ersten Ventilsitz 10 vorgespannt wird.

Wie gezeigt, bilden die Ringstege 36 und 38 gleichzeitig die Umfangswandung 44 eines Hohlraums 46, welcher durch die Membranscheibe 6, d.h. deren mittleren Bereich, in den Eingangsraum 8 und den Ausgangsraum 12 unterteilt wird.

Wie gezeigt, enthalten die Ringstege 36 und 38 gleichzeitig die Verbindungskanäle 30 und 32.

Die Ringstege 36 und 38 bilden gleichzeitig die radiale Innenwandung 48 des Entlastungsraums 18.

Wie ferner aus der Zeichnung ersichtlich, ist die Membranscheibe 6 mit einer zentralen Öffnung 50 versehen, welche durch den Ventilsitz 10 vom Eingangsraum 8 getrennt ist. Der Eingangsraum 8 seinerseits ist über einen oder mehrere Verbindungskanäle 52 mit dem Eingang 7 des ersten Schlauchanschlussgehäuses 2 verbunden.

Die radial Aussenwandung 54 des Entlastungsraums 18 wird durch eine nach oben vorstehende Ringschürze 56 gebildet, welche mit ihrem Oberende in eine entsprechend gestaltete Ringnut 58 des zweiten Schlauchanschlussgehäuses 4 eingreift und die Verbindung zwischen den beiden Schlauchanschlussgehäusen 2 und 4 herstellt.

Sollte bei dem dargestellten Ausführungsbeispiel der Druck in dem Ausgangsraum 12 bzw. dem Ausgang 14 des zweiten Schlauchanschlussgehäuses 4 einen konstruktiv bestimmten Wert überschreiten, so wird über die Verbindungskanäle 30 dieser Druck auf den Randstreifen 22 der Membranscheibe 6 wirksam und lenkt diesen nach unten aus. Hierdurch löst sich der Randstreifen 22 von dem zweiten Ventilsitz 24, so dass von der Eingangskammer 26 oberhalb des Randstreifens 22 ein Durchflussquerschnitt zur Ausgangskammer 28 geöffnet wird, von wo der Druck durch die Verbindungskanäle 32 zum Eingangsraum 8 und von dort durch den Verbindungskanal 52 zum Eingang 7 des zweiten Schlauchanschlussgehäuses entlastet wird.

Ein typischer Anwendungsfall eines solchen Rückschlagventils, welches intern mit einem Entlastungsventil versehen ist, ist beispielsweise in der Medizintechnik die Verwendung im Zusammenhang mit einem Beatmungstubus, wobei der Ausgang 14 des zweiten Schlauchanschlussgehäuses 4 an den Cuff des Tubus angeschlossen ist. Der Cuff wird beispielsweise mittels einer an den Eingang 7 des ersten Schlauchanschlussgehäuses 2 angesetzten 50 ml-Injektionsspritze gefüllt. Nach Abnehmen der Injektionsspritze ist der Druck am Eingang 7 des zweiten Schlauchanschlussgehäuses 2 der atmosphärische Druck und die Membranscheibe 6 hat dann das Rückschlagventil durch Bewegung gegen den Ventilsitz 10 geschlossen. Sollte nun der Druck am Ausgang 14, d.h. in dem Cuff des Trachealtubus, zu hoch sein oder durch Bewegung des Patienten zu hoch werden, so wird dieser Druck in der oben beschriebenen Weise über das Entlastungsventil 16 letztlich zur Atmosphäre entlastet.

Sämtliche aus der Beschreibung, den Ansprüchen und der Zeichnung hervorgehenden Merkmale und Vorteile der Erfindung, einschließlich konstruktiver Einzelheiten und räumlicher Anordnungen, können sowohl für sich als auch in beliebiger Kombination erfindungswesentlich sein.

### BEZUGSZEICHENLISTE

- 1 =: Rückschlagventil
- 2 =: erstes Schlauchanschlussgehäuse
- 4 =: zweites Schlauchanschlussgehäuse
- 6 =: Membranscheibe
- 7 =: Eingang von 2
- 8 =: Eingangsraum
- 10 =: Ventilsitz
- 12 =: Ausgangsraum
- 14 =: Ausgang von 4
- 16 =: Entlastungsventil
- 18 =: Entlastungsraum
- 20 =: Einspannung
- 22 =: Randstreifen von 6
- 23 =: Aussenrand von 22
- 24 =: zweiter Ventilsitz
- 26 =: Eingangskammer
- 28 =: Ausgangskammer
- 30 =: Verbindungskanal
- 32 =: Verbindungskanal
- 34 =: Ringwulst
- 36 =: Ringsteg
- 38 =: Ringsteg
- 40 =: Ringnut
- 42 =: Ringnut
- 44 =: Umfangswandung
- 46 =: Hohlraum
- 48 =: Innenwandung
- 50 =: Öffnung
- 52 =: Verbindungskanal
- 54 =: Aussenwandung
- 56 =: Ringschürze
- 58 =: Ringnut

## Patentansprüche

1. Rückschlagventil (1) mit einem ersten Schlauchanschlussgehäuse (2) und einem zweiten Schlauchanschlussgehäuse (4) und einer zwischen den beiden Schlauchanschlussgehäusen (2, 4) angeordneten Membranscheibe (6) aus flexiblem Material, welche zwischen den beiden Schlauchanschlussgehäusen (2, 4) eingeklemmt und gegen einen in einem Eingangsraum (8) angeordneten Ventilsitz (10) vorgespannt ist und bei Überdruck im Eingangsraum (8) von dem Ventilsitz (10) abhebbar ist und einen Durchflussquerschnitt zu einem Ausgangsraum (12) freigibt, wobei der Ausgangsraum (12) mit einem bei Überdruck öffnenden Ventil (16) verbunden ist, die Membranscheibe (6) radial außerhalb deren Einspannung (20) mit einem ringförmigen Streifen (22) in einem Raum (18) gegen einen ringförmigen zweiten Ventilsitz (24) in Richtung des Eingangsraums (8) vorgespannt ist, derart, dass der Raum (18) in eine ringförmige Eingangskammer (26) und eine ringförmige Ausgangskammer (28) unterteilt wird und der Streifen (22) der Membranscheibe (6) das Schließglied des bei Überdruck öffnenden Ventils (16) bildet, **dadurch gekennzeichnet, dass** das bei Überdruck öffnende Ventil (16) als Einwege-Entlastungsventil (16) ausgebildet ist, dass der Raum (18) als Entlastungsraum (18) ausgebildet ist, dass der Streifen (22) durch den freien Randstreifen (22) der Membranscheibe (6) gebildet ist, welcher in den Entlastungsraum (18) vorsteht, und dass die Ausgangskammer (28) über ein oder mehrere Verbindungskanäle (32) mit dem Eingangsraum verbunden ist.

2. Rückschlagventil nach Anspruch 1, **dadurch gekennzeichnet, dass** der Entlastungsraum (18) ringförmig ausgebildet und radial außerhalb des Eingangsraums (8) angeordnet ist.

3. Rückschlagventil nach Anspruch 1 oder 2, **dadurch gekennzeichnet, dass** die Eingangskammer (26) über einen oder mehrere Verbindungskanäle (30) mit dem Ausgangsraum (12) verbunden ist.

4. Rückschlagventil nach einem der vorstehenden Ansprüche, **dadurch gekennzeichnet, dass** die Membranscheibe (6) radial innerhalb des Randstreifens (22) mit einem Ringwulst (34) versehen ist, dass das erste Schlauchanschlussgehäuse (2) und das zweite Schlauchanschlussgehäuse (4) mit einander gegenüberliegenden Ringstegen (36, 38) versehen ist, in deren aufeinander zu weisenden Flächen Ringnuten (40, 42) vorgesehen sind, welche den Ringwulst (34) aufnehmen, wobei die Ringstege (36, 38) die Umfangswandung (44) eines durch die Membranscheibe (6) in den Eingangsraum (8) und den Ausgangsraum (12) unterteilten Hohlraums (46) bilden.

5. Rückschlagventil nach Anspruch 4, **dadurch gekennzeichnet, dass** die Ringstege (36, 38) die radiale Innenwandung (48) des Entlastungsraums (18) bilden.

6. Rückschlagventil nach einem der vorstehenden Ansprüche, **dadurch gekennzeichnet, dass** die Membranscheibe (6) eine von dem ersten Ventilsitz (10) umgebene Öffnung (50) aufweist, welche durch den Ventilsitz (10) von dem Eingangsraum (8) getrennt ist, und dass der Eingangsraum (8) über einen oder mehrere Verbindungskanäle (52) mit dem Eingang (7) des ersten Schlauchanschlussgehäuses (2) verbunden ist.

## Claims

1. Non-return valve (1), with a first hose-connection housing (2) and with a second hose-connection housing (4) and with a diaphragm disc (6) consisting of flexible material which is arranged between the two hose-connection housings (2, 4) and which is clamped between the two hose-connection housings (2, 4) and is prestressed against a valve seat (10) arranged in an inlet space (8) and, in the event of overpressure in the inlet space (8), can be lifted off from the valve seat (10) and releases a throughflow cross section to an outlet space (12), the outlet space (12) being connected to a valve (16) opening in the event of overpressure, the diaphragm disc (6) being prestressed, radially outside its clamping point (20), in the direction of the inlet space (8) in a space (18) against an annular second valve seat (24) by means of an annular strip (22), in such a way that the space (18) is subdivided into an annular inlet chamber (26) and an annular outlet chamber (28), and the strip (22) of the diaphragm disc (6) forms the closing member of the valve (16) opening in the event of overpressure, **characterized in that** the valve (16) opening in the event of overpressure is designed as a one-way relief valve (16), **in that** the space (18) is designed as a relief space (18), **in that** the strip (22) is formed by the free marginal strip (22) of the diaphragm disc (6), the said free marginal strip projecting into the relief space (18), and **in that** the outlet chamber (28) is connected to the inlet space via one or more connecting ducts (32).

2. Non-return valve according to Claim 1, **characterized in that** the relief space (18) is designed annularly and is arranged radially outside the inlet space (8).

3. Non-return valve according to Claim 1 or 2, **characterized in that** the inlet chamber (26) is connected to the outlet space (12) via one or more connecting ducts (30).

4. Non-return valve according to one of the preceding claims, **characterized in that** the diaphragm disc (6) is provided with an annular bead (34) radially within the marginal strip (22), **in that** the first hose-connection housing (2) and the second hose-connection housing (4) are provided with annular webs (36, 38) which lie opposite one another and in the mutually confronting faces of which are provided annular grooves (40, 42) which receive the annular bead (34), the annular webs (36, 38) forming the circumferential wall (44) of a cavity (46) subdivided by the diaphragm disc (6) into the inlet space (8) and the outlet space (12).

5. Non-return valve according to Claim 4, **characterized in that** the annular webs (36, 38) form the radial inner wall (48) of the relief space (18).

6. Non-return valve according to one of the preceding claims, **characterized in that** the diaphragm disc (6) has an orifice (50) which is surrounded by the first valve seat (10) and which is separated from the inlet space (8) by the valve seat (10), and **in that** the inlet space (8) is connected to the inlet (7) of the first hose-connection housing (2) via one or more connecting ducts (52).

## Revendications

1. Soupape de retenue (1), comprenant un premier boîtier de raccordement de tuyau (2) et un deuxième boîtier de raccordement de tuyau (4) et un disque à membrane (6) en matériau flexible disposé entre les deux boîtiers de raccordement de tuyau (2, 4), qui est serré entre les deux boîtiers de raccordement de tuyau (2, 4) et qui est précontraint contre un siège de soupape (10) disposé dans un espace d'entrée (8), et qui, en cas de surpression dans l'espace d'entrée (8), peut se soulever du siège de soupape (10), et libère une section transversale d'écoulement vers un espace de sortie (12), l'espace de sortie (12) étant connecté à une soupape (16) s'ouvrant en cas de surpression, le disque à membrane (6) étant précontraint radialement à l'extérieur de son serrage (20) avec un ruban de forme annulaire (22) dans un espace (18) contre un deuxième siège de soupape annulaire (24) dans la direction de l'espace d'entrée (8), de telle sorte que l'espace (18) soit divisé en une chambre d'entrée annulaire (26) et une chambre de sortie annulaire (28) et que le ruban (22) du disque à membrane (6) forme l'organe de fermeture de la soupape (16) s'ouvrant en cas de surpression, **caractérisée en ce que** la soupape (16) s'ouvrant en cas de surpression est réalisée sous forme de soupape de décharge à une voie (16), **en ce que** l'espace (18) est réalisé sous forme d'espace de décharge (18), **en ce que** le ruban (22) est formé par le ruban de bord libre (22) du disque à membrane (6), qui dépasse dans l'espace de décharge (18), et **en ce que** la chambre de sortie (28) est connectée à l'espace d'entrée par le biais d'un ou de plusieurs canaux de connexion (32).

2. Soupape de retenue selon la revendication 1, **caractérisée en ce que** l'espace de décharge (18) est réalisé sous forme annulaire et est disposé radialement à l'extérieur de l'espace d'entrée (8).

3. Soupape de retenue selon la revendication 1 ou 2, **caractérisée en ce que** la chambre d'entrée (26) est connectée à l'espace de sortie (12) par le biais d'un ou de plusieurs canaux de connexion (30).

4. Soupape de retenue selon l'une quelconque des revendications précédentes, **caractérisée en ce que** le disque à membrane (6) est pourvu radialement à l'intérieur du ruban de bord (22) d'un bourrelet annulaire (34), **en ce que** le premier boîtier de raccordement de tuyau (2) et le deuxième boîtier de raccordement de tuyau (4) sont pourvus de nervures annulaires (36, 38) opposées l'une à l'autre, dans les surfaces en regard desquelles sont prévues des rainures annulaires (40, 42), qui reçoivent le bourrelet annulaire (34), les nervures annulaires (36, 38) formant la paroi périphérique (44) d'un espace creux (46) divisé par le disque à membrane (6) dans l'espace d'entrée (8) et l'espace de sortie (12).

5. Soupape de retenue selon la revendication 4, **caractérisée en ce que** les nervures annulaires (36, 38) forment la paroi interne radiale (48) de l'espace de décharge (18).

6. Soupape de retenue selon l'une quelconque des revendications précédentes, **caractérisée en ce que** le disque à membrane (6) présente une ouverture (50) entourée par le premier siège de soupape (10), qui est séparée de l'espace d'entrée (8) par le siège de soupape (10), et **en ce que** l'espace d'entrée (8) est connecté à l'entrée (7) du premier boîtier de raccordement de tuyau (2) par le biais d'un ou de plusieurs canaux de connexion (52).
